(19) Europäisches Patentamt / European Patent Office / Office européen des brevets

(11) EP 4 061 861 B1

(12) **EUROPEAN PATENT SPECIFICATION**

(45) Date of publication and mention of the grant of the patent:
**01.11.2023 Bulletin 2023/44**

(21) Application number: **20800138.8**

(22) Date of filing: **03.11.2020**

(51) International Patent Classification (IPC):
***C08F 210/16*** *(2006.01)* ***C08F 4/6592*** *(2006.01)*
***C08F 2/02*** *(2006.01)* ***C08F 2/06*** *(2006.01)*

(52) Cooperative Patent Classification (CPC):
(C-Sets available)
**C08F 210/16;** C08F 2420/07 (Cont.)

(86) International application number:
**PCT/EP2020/080795**

(87) International publication number:
**WO 2021/099106 (27.05.2021 Gazette 2021/21)**

(54) **CONTINUOUS SOLUTION POLYMERIZATION PROCESS**

KONTINUIERLICHES LÖSUNGSPOLYMERISATIONSVERFAHREN

PROCESSUS CONTINU DE POLYMÉRISATION EN SOLUTION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.11.2019 EP 19209618**

(43) Date of publication of application:
**28.09.2022 Bulletin 2022/39**

(73) Proprietor: **Basell Poliolefine Italia S.r.l.**
**20121 Milano (IT)**

(72) Inventors:
- **ARICH DE FINETTI, Nicolò**
  **44122 Ferrara (IT)**
- **BAITA, Pietro**
  **44122 Ferrara (IT)**
- **MAZZUCCO, Antonio**
  **44122 Ferrara (IT)**
- **PICA, Roberta**
  **44122 Ferrara (IT)**

(74) Representative: **LyondellBasell**
**c/o Basell Poliolefine Italia**
**Intellectual Property**
**P.le Donegani 12**
**44122 Ferrara (IT)**

(56) References cited:
**EP-A1- 1 515 998** **US-B2- 8 399 586**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08F 210/16, C08F 2/02;**
**C08F 210/16, C08F 2/06;**
**C08F 210/16, C08F 4/65927;**
C08F 210/16, C08F 210/14, C08F 2500/12,
C08F 2500/08, C08F 2500/27, C08F 2500/34

## Description

### FIELD OF THE INVENTION

The present disclosure relates to a continuous solution polymerization process comprising the polymerization in a liquid medium of ethylene and/or alpha-olefins to obtain a polymeric solution, which is successively transferred to a section where the obtained polymer product is recovered from the polymerization reaction solution.

### BACKGROUND OF THE INVENTION

Continuous solution olefin polymerization processes generally entail the preparation of a solution of the olefin monomer(s) in a solvent that is subsequently contacted with a catalyst for polymerization. The liquid reaction medium comprises the olefin monomer(s) and generally, depending on the specific olefin to be polymerized, an inert hydrocarbon solvent useful to favor the solubility of the polyolefin in the liquid medium.

The polymerization of 1-butene, as known in the art, can occur in the absence of a polymerization inert solvent, since poly-1-butene is completely soluble in the liquid monomer at the usual polymerization conditions, thus leading to the formation of a polymeric solution.

However other olefins, such as for instance ethylene, propylene or higher alpha-olefins, have so far been polymerized in solution phase in the presence of a suitable inert solvent, such as cyclohexane, n-hexane, n-heptane, 2-methylpentane or Isopar™ E (isoparaffinic hydrocarbon), as the obtained polyolefins are not soluble in the liquid monomer at the usual polymerization conditions.

The presence of an inert solvent implies the necessity of solvent-related process sections, such as a solvent storage system and a complex solvent recovery section whereby the inert solvent is removed from the obtained polymer that is then collected in an usable form.

It would be desirable to find a solution allowing simplifying the solvent-related process sections and, consequently, reducing CAPEX expenditures for industrial plants.

It has now been found that olefins other that 1-butene can be polymerized in solution phase in the absence of an inert solvent under specific polymerization conditions.

### SUMMARY OF THE INVENTION

According to an aspect, the present disclosure provides a process for the continuous solution polymerization comprising polymerizing a first olefin of formula $CH_2=CHR^1$, wherein $R^1$ is hydrogen or a hydrocarbon radical having from 1 to 8 carbon atoms with a second olefin of formula $CH_2=CHR^2$, wherein $R^2$ is a hydrocarbon radical having from 3 to 8 carbon atoms, in the presence of a polymerization catalyst and in the absence of an inert solvent, at a polymerization temperature (Tp) satisfying the following relationship:

$$Tp \geq Tm + 20°C$$

wherein Tm is the melting temperature of the obtained polymer.

The process described herein makes it possible to eliminate of the following process sections:

- solvent logistics,
- solvent storage and pumping,
- solvent purification,

and, in addition, to simplify the recovery section.

### DETAILED DESCRIPTION OF THE INVENTION

As used in the present description, the term "polymer melt" refers to an olefin polymer in the molten state that, in spite of its very high viscosity (of at least $10^6$ centiPoise) is still able to be pumped by means of a gear pump.

The process described herein is carried out at a polymerization temperature (Tp) satisfying the relationship $Tp \geq Tm + 20°C$, preferably $Tp \geq Tm + 25°C$, more preferably $Tp \geq Tm + 30°C$, wherein Tm is the melting temperature of the obtained polymer.

The polymerization catalyst used in the process described herein can be a Ziegler-Natta catalyst system and/or a single-site catalyst system comprising a metallocene compound and an alumoxane, as the catalyst activator.

The process described herein can be performed in one or more continuously stirred tank reactors (CSTR) or in one or more static mixer reactors (SMR). The temperature in the reactor is generally held down by an external heat exchanger.

A solution of a polyolefin in the reaction medium is obtained from the polymerization step. According to the process described herein, the reaction medium comprises only the unreacted monomers.

Examples of the first olefin monomer of formula $CH_2=CHR^1$, wherein $R^1$ is hydrogen or a hydrocarbon radical having 2 to 8 carbon atoms, that are polymerized in the process described herein are ethylene, propylene, 1-butene, 1-pentene, 1-hexene, 4-methyl-1-pentene, 1-octene and 1-decene.

Examples of the second olefin monomer of formula $CH_2=CHR^2$, wherein $R^2$ is a hydrocarbon radical having 5 to 8 carbon atoms, that are polymerized in the process described herein are 1-pentene, 1-hexene, 4-methyl-1-pentene, 1-octene and 1-decene.

According to an embodiment of the process described herein, the first olefin monomer is ethylene and the second olefin monomer is 1-octene.

The content of the second olefin monomer in the obtained polymer products is generally comprised between 5 and 50 % by weight, preferably between 10 and 45 % by weight, more preferably between 15 and 40 % by weight.

Molecular weight regulators, such as hydrogen, can be used to control the molecular weight of the obtained polyolefins. Different operative conditions can be adopted in the polymerization step as regards the concentration of the molecular weight regulator and the different monomers.

Depending on the catalyst system and the olefin monomers, the polymerization is generally operated at temperatures generally higher than 60 °C, preferably in the range of from 60 to 150 °C, more preferably from 80 to 120 °C.

Also depending on the catalyst system and the olefin monomers, the polymerization is generally operated at pressures lower than 50 barg, preferably in the range of from 20 to 50 barg, more preferably from 25 to 40 barg.

The residence time of the liquid reaction medium inside the polymerization apparatus is generally comprised between 20 minutes and 200 minutes, preferably between 60 minutes and 180 minutes.

A highly viscous polymeric solution is discharged from the polymerization reactor. The viscosity of the obtained polymeric solution should not exceed a threshold value, as otherwise it becomes extremely difficult stirring and/or processing the polymeric solution downstream the polymerization section. The viscosity of the polymeric solution is generally comprised between 1000 and 100000 centiPoises.

The polymeric solution discharged from the polymerization is transferred, optionally by means of a volumetric pump, to the downstream separation step where the unreacted monomers are removed from the obtained polyolefin particles. Said removal of the unreacted monomers can be suitably achieved by a melt devolatilization technique, which starting from the polymer solution leads to remove the volatile components from the produced polyolefin, which is separated in the form of a polymer melt.

High temperatures, generally in the order of 150-220°C, are required to perform the melt devolatilization technique, so that the polymer solution has to be previously subjected to deactivation of the catalyst components contained therein. The catalyst deactivation avoids a further uncontrolled polymerisation or a thermal degradation of the polymer during the volatilization step. It avoids also uncontrolled reactions of the catalyst residues that can provide by-products affecting the polymer quality (e.g. colour). The deactivation of the polymeric solution can be performed in one or more mixing tanks placed in series or, alternatively, in a single deactivation apparatus equipped with a sequence of more mixing stages. In the case of polymerization carried out in the presence of a Ziegler-Natta catalyst, any of the deactivating compounds known in the art can be employed. Suitable deactivating compounds are water or organic compounds with a boiling point higher than 150°C and at least a hydroxy group. Examples of preferred deactivating compounds are water, propylenglycol, dipropylenglycol, glycerol.

After the catalyst deactivation, the polymeric solution is subjected to heating by flowing it inside a heat exchanger in order to increase its temperature to values comprised between 120°C and 250°C, this value of temperature being bound to the volatility of the specific monomers and inert solvents to be recovered in the separation step. A multi-tube heat exchanger with static mixing elements inserted inside each tube can be used to this purpose, as described in International Patent Application WO 04/000891. The presence of a plurality of static mixing elements inside each tube is aimed to achieve an intense mixing of the highly-viscous polymeric solution. Said elements cause the mixing between the outermost and the innermost veins of the flowing stream, so as to favour a good heat transfer between the different threads of fluid. As a consequence, a homogenous distribution of temperature is obtained in the polymer solution: mixing rods may be used as static elements inserted in the tubes of the heat exchanger.

The separation step can be performed by means of one or more volatilization chambers. When two or more volatilization chambers are used, they operate at a decreasing pressure. According to an embodiment of the process described herein, the separation step is performed by means of a sequence of three volatilization chambers, as described below.

At the outlet from the heat exchanger the polyolefin solution is introduced in the upper portion of a first volatilization chamber, which is operated at a temperature from 120°C to 250°C and a pressure from 5 to 20 bar, preferably

from 10 to 15 bar. In the first volatilization chamber the different components of the polyolefin solution are separated: the polyolefin falls downward by gravity as a polymer melt, while the volatile components, mostly olefin monomers and comonomers, are released from the polyolefin as a gaseous stream, which flows upward to the top of the volatilization chamber. During the vertical drop of the polymer melt along the first volatilizer the unreacted (co)monomers are released away, so that at the discharge from the first volatilizer the content of unreacted (co)monomers in the polyolefin melt is generally reduced to less than 5% by weight.

The second devolatilization chamber is preferably operated at a higher temperature with respect to the first chamber, so that at the outlet from the first volatilizer the polyolefin melt is generally subjected to further heating in a second multi-tube heat exchanger. This heat exchanger has the function of adjusting the temperature of the polymer melt up to the value requested in the second devolatilization chamber. In particular, the temperature in the second devolatilization chamber is adjusted at a value from 180 to 250°C, while the pressure is maintained close to the atmospheric value, in a range from 0.8 to 5.0 bar, preferably from 1.0 to 3.0 bar. In view of the temperature increase, and above all, due to the considerable decrease of pressure, the residual amounts of olefin (co)monomers and a considerable amount of inert solvent are released from the polyolefin melt as a gaseous stream, which flows upward to the top of the second volatilization chamber. Simultaneously, the polyolefin melt drops by gravity and settles at the bottom of the second volatilizer. In particular, at the discharge from the second volatilizer the content of unreacted monomers in the polyolefin melt is reduced to less than 1% by weight.

Successively, the polyolefin melt withdrawn from the second volatilizer is introduced into a third devolatilization chamber, operated at the same temperature range of the second volatilizer, but under vacuum conditions. A vacuum pump is arranged on the line transferring the gaseous components from the top of this volatilizer to the monomer recovery section. Said vacuum pump establishes a high degree of vacuum inside the third chamber, in particular a pressure comprised between 5 and 100 mbar, preferably between 10 and 25 mbar. As a consequence of said vacuum conditions, residual amounts of monomers and inert solvent are released away during the vertical drop and settling of the polyolefin melt along the third volatilization chamber. Accordingly, at the outlet from the third volatilizer the total content of monomers is negligible (generally lower than 50 ppm weight), while the content of inert solvent in the polyolefin melt is strongly reduced, up to less than 500 ppm weight.

The polyolefin melt obtained at the bottom of each volatilizer is characterized by a very high viscosity, of at least $10^6$ cP. As a consequence, specific pumps, such as gear pumps, are preferably used to guarantee the extraction of the polymer melt from the bottom of each devolatilization chamber. Preferably, the gear pump is directly coupled to the bottom flange of each volatilizer in order to prime the pump and to convey the polyolefin melt to the following process steps.

The gaseous streams collected at the top of each volatilizer may also contain little amounts of other volatile components, such as oligomers, catalyst deactivators and by-products deriving from the catalyst deactivation, so that the monomer recovery section of the polymerization plant requires the separation of said volatile compounds from the unreacted (co)monomers. The monomer recovery section comprises one or more distillation columns, a drying unit, and recycle lines of liquid monomers to the polymerization reactor.

The solution polymerization of olefins herewith described is not restricted to the use of any particular family of polymerization catalysts. The invention is useful in any exothermic polymerization reaction employing any catalyst, whether it is supported or unsupported, and regardless of whether it is in pre-polymerized form.

The polymerization reaction can be carried out in the presence of highly active catalytic systems, such as Ziegler-Natta catalysts, single site catalysts, chromium-based catalysts, vanadium-based catalysts.

A Ziegler-Natta catalyst system comprises the catalysts obtained by the reaction of a transition metal compound of groups 4 to 10 of the Periodic Table of Elements (new notation) with an organometallic compound of group 1, 2, or 13 of the Periodic Table of element.

In particular, the transition metal compound can be selected among compounds of Ti, V, Zr, Cr, and Hf. Preferred compounds are those of formula $Ti(OR)_nX_{y-n}$ in which n is comprised between 0 and y; y is the valence of titanium; X is halogen and R is a hydrocarbon group having 1-10 carbon atoms or a COR group. Among them, particularly preferred are titanium compounds having at least one Ti-halogen bond such as titanium tetrahalides or halogenalcoholates. Preferred specific titanium compounds are $TiCl_3$, $TiCl_4$, $Ti(OBu)_4$, $Ti(OBu)Cl_3$, $Ti(OBu)_2Cl_2$, $Ti(OBu)_3Cl$.

Preferred organometallic compounds are the organo-Al compounds and in particular Al-alkyl compounds. The alkyl-Al compound is preferably chosen among the trialkyl aluminum compounds such as for example triethylaluminum, triisobutylaluminum, tri-n-butylaluminum, tri-n-hexylaluminum, tri-n-octylaluminum. It is also possible to use alkylaluminum halides, alkylaluminum hydrides or alkylaluminum sesquichlorides such as $AlEt_2Cl$ and $Al_2Et_3Cl_3$ optionally in mixture with said trialkyl aluminum compounds.

Particularly suitable high yield Ziegler-Natta catalysts are those wherein the titanium compound is supported on magnesium halide in active form which is preferably $MgCl_2$ in active form. Particularly for the preparation crystalline polymers of $CH_2CHR$ olefins, where R is a C1 C10 hydrocarbon group, internal electron donor compounds can be supported on the $MgCl_2$. Typically, they can be selected among esters, ethers, amines, and ketones. In particular, the

use of compounds belonging to 1,3-diethers, cyclic ethers, phthalates, benzoates, acetates and succinates is preferred.

It is also possible to use, besides the electron-donor present in the solid catalytic component, an external electron-donor (ED) added to the aluminium alkyl co-catalyst component or to the polymerization reactor. These external electron donors can be selected among alcohols, glycols, esters, ketones, amines, amides, nitriles, alkoxysilanes and ethers. The electron donor compounds (ED) can be used alone or in mixture with each other. Preferably the ED compound is selected among aliphatic ethers, esters and alkoxysilanes. Preferred ethers are the C2-C20 aliphatic ethers and in particular the cyclic ethers preferably having 3-5 carbon atoms, such as tetrahydrofurane (THF), dioxane.

Preferred esters are the alkyl esters of C1-C20 aliphatic carboxylic acids and in particular C1-C8 alkyl esters of aliphatic mono carboxylic acids such as ethylacetate, methyl formiate, ethylformiate, methylacetate, propylacetate, i-propylacetate, n-butylacetate, i-butylacetate.

The preferred alkoxysilanes are of formula $R_a^1R_b^2Si(OR^3)_c$, where a and b are integer from 0 to 2, c is an integer from 1 to 3 and the sum (a+b+c) is 4; $R^1$, $R^2$, and $R^3$, are alkyl, cycloalkyl or aryl radicals with 1-18 carbon atoms. Particularly preferred are the silicon compounds in which a is 1, b is 1, c is 2, at least one of $R^1$ and $R^2$ is selected from branched alkyl, cycloalkyl or aryl groups with 3-10 carbon atoms and $R^3$ is a $C_1$-$C_{10}$ alkyl group, in particular methyl.

Other useful catalysts are the vanadium-based catalysts, which comprise the reaction product of a vanadium compound with an aluminum compound, optionally in the presence of a halogenated organic compound. Optionally the vanadium compound can be supported on an inorganic carrier, such as silica, alumina, magnesium chloride. Suitable vanadium compounds are $VCl_4$, $VCl_3$, $VOCl_3$, vanadium acetyl acetonate.

Other useful catalysts are those based on chromium compounds, such as chromium oxide on silica, also known as Phillips catalysts.

Other useful catalysts are single site catalysts, for instance metallocene-based catalyst systems which comprise:

- at least a transition metal compound containing at least one $\pi$ bond,
- at least an alumoxane or a compound able to form an alkyl-metallocene cation, and
- optionally an organo-aluminum compound.

A preferred class of metal compounds containing at least one $\pi$ bond are metallocene compounds belonging to the following formula (I):

$$Cp(L)_qAMX_p \qquad (I)$$

wherein M is a transition metal belonging to group 4, 5 or to the lanthanide or actinide groups of the Periodic Table of the Elements; preferably M is zirconium, titanium or hafnium;
the substituents X, equal to or different from each other, are monoanionic sigma ligands selected from the group consisting of hydrogen, halogen, $R^6$, $OR^6$, $OCOR^6$, $SR^6$, $NR^6_2$ and $PR^6_2$, wherein $R^6$ is a hydrocarbon radical containing from 1 to 40 carbon atoms; preferably, the substituents X are selected from the group consisting of -Cl, -Br, -Me, -Et, -n-Bu, -sec-Bu, -Ph, -Bz, $-CH_2SiMe_3$, -OEt, -OPr, -OBu, -OBz and $-NMe_2$;
p is an integer equal to the oxidation state of the metal M minus 2;
n is 0 or 1; when n is 0 the bridge L is not present;
L is a divalent hydrocarbon moiety containing from 1 to 40 carbon atoms, optionally containing up to 5 silicon atoms, bridging Cp and A, preferably L is a divalent group $(ZR^7_2)_n$; Z being C, Si, and the $R^7$ groups, equal to or different from each other, being hydrogen or a hydrocarbon radical containing from 1 to 40 carbon atoms;
more preferably L is selected from $Si(CH_3)_2$, $SiPh_2$, SiPhMe, $SiMe(SiMe_3)$, $CH_2$, $(CH_2)_2$, $(CH_2)_3$ or $C(CH_3)_2$;
Cp is a substituted or unsubstituted cyclopentadienyl group, optionally condensed to one or more substituted or unsubstituted, saturated, unsaturated or aromatic rings;
A has the same meaning of Cp or it is a $NR^7$, -O, S, moiety wherein $R^7$ is a hydrocarbon radical containing from 1 to 40 carbon atoms;

Alumoxanes are considered to be linear, branched or cyclic compounds containing at least one group of the type:

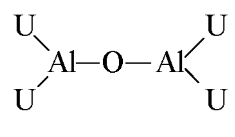

wherein the substituents U, same or different, are defined above.

In particular, alumoxanes of the formula:

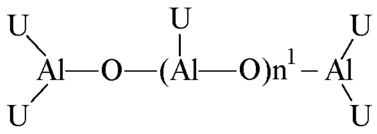

can be used in the case of linear compounds, wherein $n^1$ is 0 or an integer of from 1 to 40 and where the U substituents, same or different, are hydrogen atoms, halogen atoms, $C_1$-$C_{20}$-alkyl, $C_3$-$C_{20}$-cyclalkyl, $C_6$-$C_{20}$-aryl, $C_7$-$C_{20}$-alkylaryl or $C_7$-$C_{20}$-arylalkyl radicals, optionally containing silicon or germanium atoms, with the proviso that at least one U is different from halogen, and j ranges from 0 to 1, being also a non-integer number; or alumoxanes of the formula:

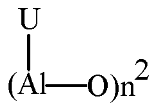

can be used in the case of cyclic compounds, wherein $n^2$ is an integer from 2 to 40 and the U substituents are defined as above.

The catalyst may suitably be employed in the form of a pre-polymer powder prepared beforehand during a pre-polymerization stage with the aid of a catalyst as described above. The pre-polymerization may be carried out by any suitable process, for example, polymerization in a liquid hydrocarbon diluent or in the gas phase using a batch process, a semi-continuous process or a continuous process.

The following examples have to be considered representative and non-limiting of the scope of the invention.

## EXAMPLES

### Testing methods

Melting temperature (Tm): ASTM-D2117.
Melt Index (MIE): ASTMD1238, condition E.
Density: ASTM-D1505.

### Comparative Example 1 and Example 1

### Preparation of the catalyst system

A solution of dimethylsilyl{(2,4,7-trimethyl-1-indenyl)-7-(2,5-dimethyl-cyclopenta[1,2-b:4,3-b']-dithiophene)} zirconium dichloride was prepared according to the description of paragraphs [0091]-[0095] of EP 3 266 824 A1.

### Polymerization

The polymerization of ethylene and 1-octene was performed in solution phase in a continuous stirred tank reactor in the presence of the above described catalyst system. In Comparative Example 1 cyclohexane was used as inert solvent, while in Example 1 no inert solvent was used and the liquid medium was composed of liquid 1-octene. Hydrogen was used as a molecular weight regulator. The polymerization conditions are reported in Table 1, which also reports the solution composition and the polyolefin concentration in the polymerization solution. The characterization data of the obtained polymers are reported in Table 2.

**Table 1**

| | | Comp. Ex. 1 | Example 1 |
|---|---|---|---|
| Temperature | °C | 100 | 95 |

(continued)

| | | Comp. Ex. 1 | Example 1 |
|---|---|---|---|
| Pressure | barg | 32 | 32 |
| Polymer concentration | %wt | 18 | 15 |
| Monomers concentration | %wt | 21 | 85 |
| Solvent concentration | %wt | 61 | 0 |
| Hydrogen/ethylene | mol/mol $10^6$ | 7396 | 8854 |
| Residence time | min | 138 | 106 |
| Mileage | kg/gMe (*) | 2036 | 8193 |
| (*) kilograms of polymer per gram of metallocene catalyst | | | |

**Table 2**

| | | Comp. Ex. 1 | Example 1 |
|---|---|---|---|
| Tm | °C | 33.1 | 54.5 |
| MIE | g/10 min | 1.3 | 2.6 |
| Density | g/cc | 0.866 | 0.855 |
| Ethylene | %wt | 60 | 57.4 |
| 1-Octene | %wt | 40 | 42.6 |

The polymeric solution containing ethylene/1-octene copolymer was withdrawn from the polymerization reactor and transferred by means of a screw pump to the separation step, performed in a sequence of three volatilization chambers operated at a decreasing pressure.

## Polymer separation and monomer recovery

The polymeric solution was introduced into the first volatilization chamber, wherein the ethylene/1-octene copolymer in the form of a polymer melt settled by gravity to the bottom of the chamber. Simultaneously, the unreacted monomers were released away from the polymer melt and flowed upward to the top of the chamber, from which they were withdrawn and conveyed to the monomer recovery section.

The polymer melt was discharged from the bottom of the first volatilizer and was introduced into a heat exchanger in order to raise its temperature up to the value requested into the second volatilization chamber. Likewise the polymer melt settled by gravity to the bottom of the second volatilization chamber releasing away considerable amounts of unreacted monomers.

Finally the polymer melt coming from the second volatilization chamber was introduced into the third volatilization chamber, which was operated under vacuum pressure. Likewise the polymer melt settled by gravity to the bottom of the third volatilization chamber releasing away further amounts of unreacted monomers.

The top and bottom temperature, as well as the operating pressure in each volatilization chamber are reported in Table 3, which also shows the residual content of ethylene and 1-octene inside the polymer melt discharged from each volatilization chamber.

**Table 3**

| | | Comp. Ex. 1 | Example 1 |
|---|---|---|---|
| $1^{st}$ chamber top/bottom | °C | 196/189 | 189/191 |
| $2^{nd}$ chamber top/bottom | °C | 162/185 | 176/202 |
| $3^{rd}$ chamber bottom | °C | 199 | 172 |
| Ethylene discharged | kg/h | 1.2 | 8.8 |

In both cases, at the outlet of the third devolatilization chamber the content of unreacted monomers in the polymer melt was negligible.

**Example 2 and Comparative Example 2**

An ethylene/1-octene copolymer AFFINITY® PL 1880G available from The Dow Chemical Company, having a melting temperature (Tm) of 99 °C, was admixed at room temperature with 1-octene (20% AFFINITY - 80% 1-octene). The temperature was gradually increased at a gradient of 0.17 °C/min until the copolymer was completely dissolved. At that point, the temperature measured was 95°C. Based on that information, a simulation of the polymerization process of ethylene and 1-octene with no inert solvent to obtain said AFFINITY copolymer was run at 130 °C (Example 2) and at 110 °C (Comparative Example 2). The simulation of Example 2 resulted in smooth operation, while the simulation of comparative example 2 resulted in operational upsets. According to the simulations, the polymerization heat is removed in an external cooler through which the reacting system is recycled by means of a recirculation pump. The service fluid of the cooler is jacket water. The heat transfer takes place by means of a temperature difference between the two sides of the cooler. This is called the driving force. The jacket water flowing in the cooler is colder than the reacting system in order to remove the polymerization heat. If the jacket water gets colder than the solubility temperature of the polymer in the reacting system, then some polymer segregates from the polymer solution as a sticky solid causing fouling on the process side of the heat transfer surface. If this happens, heat transfers gets more difficult and temperature controllers calls for colder jacket water, making the situation even worse. The reactor operation gets unstable in temperature and the reactor content becomes inhomogeneous.

## Claims

1. A process for the continuous solution polymerization comprising polymerizing a first olefin of formula $CH_2=CHR^1$, wherein $R^1$ is hydrogen or a hydrocarbon radical having from 1 to 8 carbon atoms with a second olefin of formula $CH_2=CHR^2$, wherein $R^2$ is a hydrocarbon radical having from 3 to 8 carbon atoms, in the presence of a polymerization catalyst and in the absence of an inert solvent, at a polymerization temperature (Tp) satisfying the following relationship:

$$Tp \geq Tm + 20°C$$

wherein Tm is the melting temperature of the obtained polymer.

2. The process according to claim 1, wherein the first olefin monomer is selected from ethylene, propylene, 1-butene, 1-pentene, 1-hexene, 4-methyl-1-pentene, 1-octene and 1-decene.

3. The process according to any of the preceding claims, wherein the second olefin monomer is selected from 1-pentene, 1-hexene, 4-methyl-1-pentene, 1-octene and 1-decene.

4. The process according to any of the preceding claims, wherein the first olefin monomer is ethylene and the second olefin monomer is 1-octene.

5. The process according to any of the preceding claims, wherein the content of the second olefin monomer in the obtained polymer products is comprised between 10 and 50 % by weight.

6. The process according to any of the preceding claims, wherein the polymerization is operated at a temperature in the range of from 60 to 150 °C.

7. The process according to any of the preceding claims, wherein the polymerization is operated at a pressure in the range of from 20 to 50 barg.

## Patentansprüche

1. Verfahren zur kontinuierlichen Lösungspolymerisation, umfassend Polymerisieren eines ersten Olefins mit der Formel $CH_2=CHR^1$, wobei $R^1$ Wasserstoff oder ein Kohlenwasserstoffrest mit 1 bis 8 Kohlenstoffatomen ist, mit einem

zweiten Olefin mit der Formel $CH_2=CHR^2$, wobei $R^2$ ein Kohlenwasserstoffrest mit 3 bis 8 Kohlenstoffatomen ist, in Gegenwart eines Polymerisationskatalysators und in Abwesenheit eines inerten Lösungsmittels bei einer Polymerisationstemperatur (Tp), welche die folgende Beziehung erfüllt:

$$Tp \geq Tm + 20\ °C$$

wobei Tm die Schmelztemperatur des erhaltenen Polymers ist.

2. Verfahren nach Anspruch 1, wobei das erste Olefinmonomer ausgewählt ist aus Ethylen, Propylen, 1-Buten, 1-Penten, 1-Hexen, 4-Methyl-1-penten, 1-Octen und 1-Decen.

3. Verfahren nach einem der vorhergehenden Ansprüche, wobei das zweite Olefinmonomer ausgewählt ist aus 1-Penten, 1-Hexen, 4-Methyl-1-penten, 1-Octen und 1-Decen.

4. Verfahren nach einem der vorhergehenden Ansprüche, wobei das erste Olefinmonomer Ethylen ist und das zweite Olefinmonomer 1-Octen ist.

5. Verfahren nach einem der vorhergehenden Ansprüche, wobei der Gehalt des zweiten Olefinmonomers in den erhaltenen Polymerprodukten zwischen 10 und 50 Gew.% liegt.

6. Verfahren nach einem der vorhergehenden Ansprüche, wobei die Polymerisation bei einer Temperatur im Bereich von 60 bis 150 °C arbeitet.

7. Verfahren nach einem der vorhergehenden Ansprüche, wobei die Polymerisation bei einem Druck im Bereich von 20 bis 50 bar Überdruck arbeitet.

**Revendications**

1. Procédé de polymérisation continue en solution comprenant la polymérisation d'une première oléfine de formule $CH_2=CHR^1$, $R^1$ représentant hydrogène ou un radical hydrocarboné comprenant 1 à 8 atomes de carbone, avec une deuxième oléfine de formule $CH_2=CHR^2$, $R^2$ représentant un radical hydrocarboné comprenant 3 à 8 atomes de carbone, en présence d'un catalyseur de polymérisation et en l'absence d'un solvant inerte, à une température de polymérisation (Tp) satisfaisant à la relation suivante :

$$Tp \geq Tm + 20°C$$

Tm étant la température de fusion du polymère obtenu.

2. Procédé selon la revendication 1, le premier monomère oléfinique étant choisi parmi l'éthylène, le propylène, le 1-butène, le 1-pentène, le 1-hexène, le 4-méthyl-1-pentène, le 1-octène et le 1-décène.

3. Procédé selon l'une quelconque des revendications précédentes, le deuxième monomère oléfinique étant choisi parmi le 1-pentène, le 1-hexène, le 4-méthyl-1-pentène, le 1-octène et le 1-décène.

4. Procédé selon l'une quelconque des revendications précédentes, le premier monomère oléfinique étant l'éthylène et le deuxième monomère oléfinique étant le 1-octène.

5. Procédé selon l'une quelconque des revendications précédentes, la teneur en deuxième monomère oléfinique dans les produits polymères obtenus étant située entre 10 et 50 % en poids.

6. Procédé selon l'une quelconque des revendications précédentes, la polymérisation étant mise en oeuvre à une température dans la plage de 60 à 150 °C.

7. Procédé selon l'une quelconque des revendications précédentes, la polymérisation étant mise en oeuvre à une pression dans la plage de 20 à 50 barg.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 04000891 A
- EP 3266824 A1